(19) Europäisches Patentamt
European Patent Office
Office européen des brevets

(11) **EP 2 548 308 B1**

(12) **FASCICULE DE BREVET EUROPEEN**

(45) Date de publication et mention
de la délivrance du brevet:
**21.01.2015 Bulletin 2015/04**

(51) Int Cl.:
**H04B 1/10** *(2006.01)*     **H04B 7/015** *(2006.01)*
**H04B 7/185** *(2006.01)*

(21) Numéro de dépôt: **10787417.4**

(86) Numéro de dépôt international:
**PCT/EP2010/068777**

(22) Date de dépôt: **02.12.2010**

(87) Numéro de publication internationale:
**WO 2011/067357 (09.06.2011 Gazette 2011/23)**

(54) **DISPOSITIF ET SYSTEME DE SUPPRESSION D'INTERFERENCES LIEES AUX TRAJETS LOINTAINS**

VORRICHTUNG UND SYSTEM ZUR UNTERDRÜCKUNG VON WEITWEGINTERFERENZEN

DEVICE AND SYSTEM FOR SUPPRESSING INTERFERENCES RELATED TO FAR PATHS.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.12.2009 FR 0905870**

(43) Date de publication de la demande:
**23.01.2013 Bulletin 2013/04**

(73) Titulaire: **THALES**
**92200 Neuilly-sur-Seine (FR)**

(72) Inventeur: **LUCIDARME, Thierry**
**F-92704 Colombes Cedex (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**WO-A1-2007/059560     US-A1- 2002 005 799**

**Description**

L'invention concerne un dispositif et un système de suppression d'interférences liées aux trajets lointains et s'applique notamment au domaine des transmissions entre aéronefs.

Les communications entre aéronefs sont habituellement qualifiées de communications « intra-flight ». La présence d'un trajet direct entre un émetteur positionné sur un premier aéronef et un récepteur positionné sur un second aéronef est habituelle. Des trajets indirects peuvent aussi être reçus par lesdits aéronefs. Ces trajets indirects peuvent être la conséquence de réflexions ou de réfractions du signal émis sur la structure desdits aéronefs. Ils peuvent aussi être la conséquence de réflexions du signal sur le sol ou sur la mer, lesdits trajets étant dans ce cas appelés habituellement échos de sol et de mer. Ces réflexions créent des interférences, leur puissance pouvant être importante, en particulier en ce qui concerne les échos de mer, notamment lorsque la houle est faible.

La forme des interférences résultant de ces échos est difficile à annuler ou à égaliser car un écho peut être lointain et éloigné temporellement d'une durée largement supérieure à un symbole de modulation, donnant lieu à de l'interférence inter-symboles préjudiciable.

Les égaliseurs classiques, qu'ils soient utilisés pour les communications terrestres ou pour les communications entre aéronefs, égalisent le canal autour d'une faible plage de retards autour du signal. A titre d'exemple, en radiocommunication GSM, des égaliseurs à cinq coefficients peuvent être utilisés et ainsi traiter des trajets affectés d'un retard n'allant pas au-delà de 20 $\mu$s. Ce type d'égaliseur est notamment décrit dans le livre de T. Lucidarme intitulé Principes de radiocommunication de troisième génération, Vuibert, 2002.

Dans le cadre de communication entre aéronefs et/ou astronefs, les réflexions dues aux échos de sol et de mer impliquent des retards importants et ne sont habituellement pas traitées, du fait de la complexité à ajouter aux récepteurs.

Un but de l'invention est notamment de pallier les inconvénients précités.

A cet effet l'invention a pour objet un dispositif embarqué de réception d'un signal s(t) en provenance d'un aéronef éloigné d'une distance d du dispositif, ledit signal s(t) résultant de la combinaison d'une pluralité de trajets de propagation, l'un des trajets correspondant à l'écho principal du signal émis, ledit dispositif comportant un égaliseur d'une profondeur de traitement T. Le dispositif comporte des moyens pour estimer la distance D parcourue par le second trajet, des moyens pour en déduire une valeur de retard $\tau$ lui étant associée, des moyens pour estimer lorsque $\tau$ est supérieur ou égal à T le signal interférent associé à l'écho principal et pour réduire la contribution dudit signal au niveau total d'interférences en réception.

D peut être estimé, par exemple, en utilisant l'expression :

$$D = \sqrt{d^2 + 4 \times ha \times hb}$$

dans laquelle :

ha est l'altitude à laquelle se trouve le dispositif par rapport au niveau de la mer ou du sol ;
hb est l'altitude de l'aéronef émetteur.

Le dispositif peut être embarqué dans un aéronef ou dans un satellite.

Selon un mode de réalisation, le dispositif comporte des moyens pour soustraire du signal reçu s(t) une version retardée de $\tau$ dudit signal afin de réduire la contribution de l'écho principal au niveau total d'interférences en réception.

Le dispositif comporte, par exemple, des moyens pour estimer le décalage Doppler différentiel $\Delta f_{diff}$ en utilisant l'expression suivante :

$$\Delta f_{diff}(k+1) = \left[ \frac{D_{k+1} - D_k}{\Delta t \times \lambda} \right] - \left[ \frac{d_{k+1} - d_k}{\Delta t \times \lambda} \right]$$

dans laquelle :

$d_k$ représente la distance entre les deux aéronefs à l'instant k ;
$D_k$ représente la valeur de la quantité D mesurée à l'instant k ;
$\Delta t$ représente le temps entre deux mesures successives du décalage Doppler différentiel ;

$\lambda$ représente la longueur d'onde du signal

et pour corriger la version retardée du signal s(t) afin d'obtenir un signal s'(t-$\tau$).

Selon un aspect de l'invention, un coefficient $\beta$ est appliqué sur le signal s'(t-$\tau$), ledit coefficient étant tel qu'il minimise en moyenne l'écart quadratique entre un signal pilote reçu et le signal s(t) reçu.

Le dispositif comporte, par exemple, des moyens pour estimer la fonction de transfert du canal de propagation dans la zone correspondant au retard $\tau$ de l'écho principal de manière à réduire la contribution de l'écho principal au niveau total d'interférences en réception par égalisation.

La fonction de transfert est obtenue, par exemple, par traitement de bits pilotes présents sur ladite zone.

Dans un mode de réalisation, le dispositif comporte des moyens d'égalisation conjointe pilotes/données utilisés pour réduire la contribution de l'écho principal au niveau total d'interférences en réception.

L'invention a aussi pour objet un système de communication entre aéronefs. Un aéronef du système comporte au moins un dispositif d'émission de signaux selon une forme d'onde choisie et un dispositif de réception tel que décrit précédemment, ledit dispositif permettant de recevoir des signaux utilisant cette même forme d'onde.

Selon un aspect de l'invention, les aéronefs du système comportent un dispositif de mesure d'altitude.

Selon un autre aspect de l'invention, le dispositif de mesure d'altitude est un radioaltimètre.

Le dispositif de mesure d'altitude peut aussi être, par exemple, un récepteur GPS.

Les aéronefs du système comportent, par exemple, des moyens de transmission réciproque de leurs positions estimée par leur récepteur GPS.

Dans un mode de réalisation du système, les aéronefs comportent des moyens de transmission réciproque de leurs altitudes (ha, hb).

L'invention a notamment comme avantages d'améliorer la robustesse des communications et le taux d'erreur binaire. Elle présente aussi l'avantage d'introduire une bonne protection contre le brouillage naturel et permet l'utilisation de méthodes d'égalisation qui ne pouvaient l'être auparavant dans le contexte des communications aéroportées.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de communications entre deux aéronefs avec un trajet direct et un écho de mer ;
- la figure 2 représente graphiquement les différents paramètres permettant de déterminer et de caractériser l'écho principal présent lors d'une communication entre deux aéronefs A et B ;
- la figure 3 donne un exemple de système de communications par satellite mettant en oeuvre l'invention ;
- la figure 4 donne un exemple de récepteur comportant un mécanisme d'annulation d'interférence.

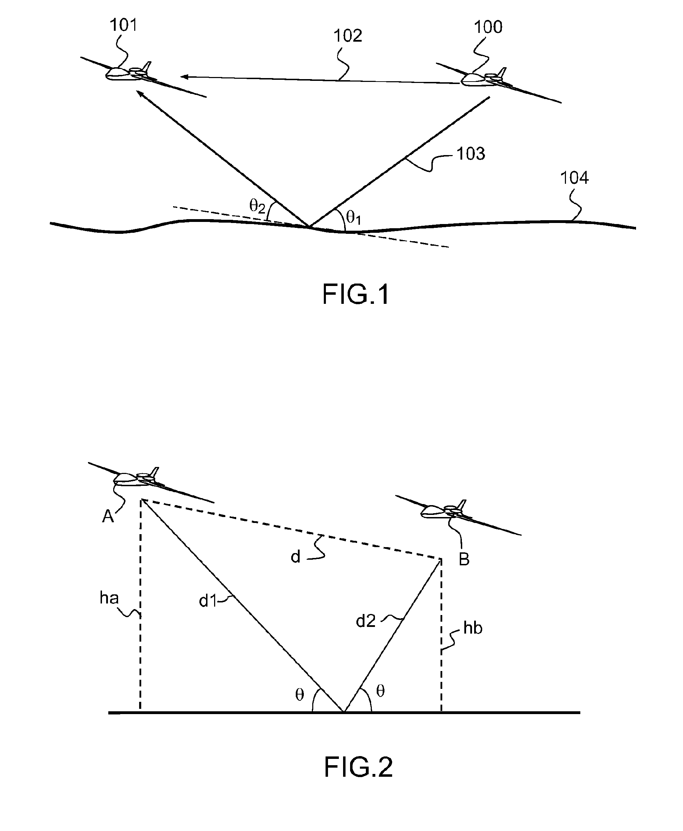

La figure 1 donne un exemple de communications entre deux aéronefs avec un trajet direct et un écho de mer.

Dans cet exemple, un premier aéronef 100 comporte un dispositif de communication émettant des données en utilisant une forme d'onde choisie. Le signal résultant est reçu au niveau d'un second aéronef 101 sous la forme d'une combinaison de trajets, notamment de la combinaison d'un trajet direct 102 et d'un trajet indirect 103. Dans cet exemple, les deux aéronefs 100, 101 survolent la mer. Le trajet indirect résulte, par exemple, de la réflexion du signal émis sur la surface de la mer 104. Dans la réalité, plusieurs trajets correspondant à des échos de mer sont reçus au niveau du second aéronef 101, lesdits trajets étant caractérisés par leur angle d'incidence $\theta_1$ sur la surface de la mer et par leur angle de réflexion $\theta_2$. Les trajets résultant de ce type de réflexion et reçus avec le plus haut niveau de puissance, c'est-à-dire générant un fort niveau d'interférence, sont les trajets autour du trajet dit optique. Le trajet optique est le trajet pour lequel $\theta_1 = \theta_2$ et est appelé dans la suite de la description écho principal.

La présente invention se propose d'identifier les caractéristiques de l'écho principal afin de réduire sa contribution au niveau d'interférence en réception.

La figure 2 représente graphiquement les différents paramètres permettant de déterminer et de caractériser l'écho principal présent lors d'une communication entre deux aéronefs A et B.

Le premier aéronef A est à une distance d d'un second aéronef B. Le premier aéronef est à une altitude ha par rapport au niveau de la mer ou du sol. Le second aéronef B est quant à lui à une altitude hb par rapport au niveau de la mer ou du sol. Le trajet associé à l'écho principal se compose d'une section incidente de longueur d1 et d'une section réfléchie de longueur d2.

Il est alors possible de déterminer la quantité D = (d1 + d2) en utilisant l'expression suivante :

$$D = \sqrt{d^2 + 4 \times ha \times hb} \qquad\qquad (1)$$

Pour avoir la capacité de déterminer cette quantité, les aéronefs A et B doivent par conséquent connaître la valeur de d ainsi que les altitudes ha et hb.

Pour cela, un dispositif de mesure d'altitude embarqué dans les aéronefs peut être utilisé. Ce type de matériel est habituellement présent sur la plupart des aéronefs.

Ainsi, l'aéronef A mesure son altitude ha en utilisant ce type de dispositif et l'aéronef B mesure son altitude hb en utilisant aussi son propre dispositif de mesure.

Un dispositif de mesure d'altitude peut être, par exemple, un radioaltimètre également appelé sonde altimétrique ou radio-altimètre. Ce type de dispositif, lorsqu'il est embarqué dans un aéronef, indique la hauteur au dessus du sol ou de la mer dudit aéronef.

Un dispositif de mesure d'altitude peut être aussi, par exemple, un récepteur GPS.

Afin d'obtenir la quantité D, il est également nécessaire de connaître la distance d entre les aéronefs A et B. Cette distance peut être obtenue, par exemple, par synchronisation de la forme d'onde utilisée, c'est-à-dire par mesure du temps propagation aller-retour du signal entre les deux aéronefs qu'il faut ensuite diviser par 2.

Une autre manière d'acquérir la distance d est que les aéronefs comportent des moyens de transmission réciproque des positions GPS appelées P(A) et P(B) des aéronefs A et B. Le calcul de distance est alors trivial. Les altitudes ha et hb peuvent aussi être transmises d'un astronef à l'autre.

Une troisième manière d'acquérir la distance d est d'utiliser les mesures des RADAR embarqués habituellement présents dans les aéronefs.

Lorsque les valeurs de d, ha et hb sont acquises, il est ensuite possible pour chaque aéronef de déterminer la quantité D en utilisant l'expression (1). De cette quantité, le retard $\tau$ de propagation peut être déduit en utilisant l'expression suivante :

$$\tau = D/c \qquad\qquad (2)$$

dans laquelle c représente la vitesse de la lumière exprimée en m/s.

Connaissant le retard $\tau$, et si ce retard correspond à une grandeur supérieure à la profondeur T de l'égaliseur embarqué s'il existe, un traitement spécifique est exécuté pour l'écho principal. Ce traitement spécifique peut prendre plusieurs formes. Ce traitement ciblé permet avantageusement de réduire la complexité d'implémentation liée habituellement au traitement des trajets éloignés temporellement du trajet principal.

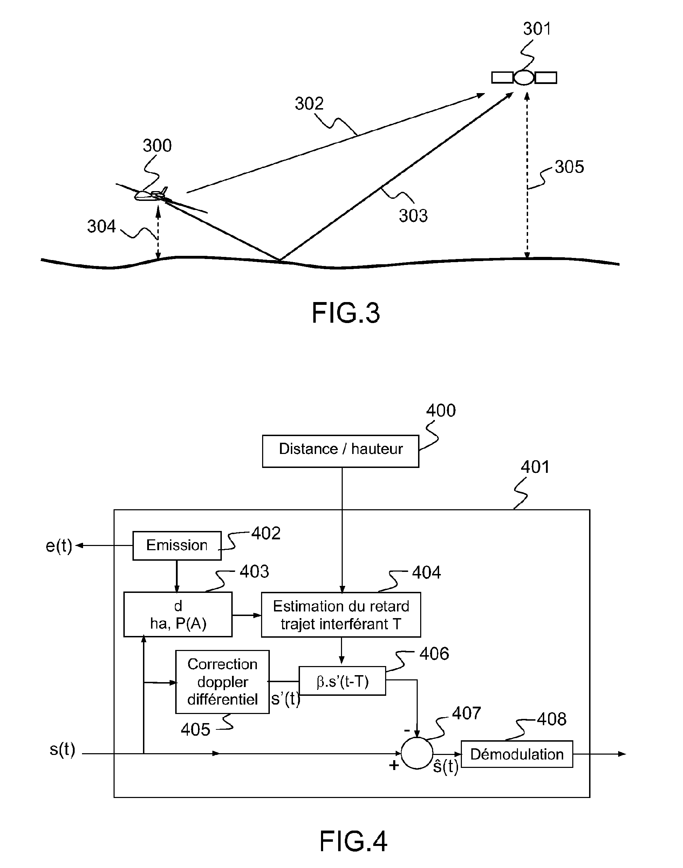

Une méthode de type annulation d'interférence peut être mise en oeuvre par soustraction du signal interférant avec une version retardée du signal reçu directement. Un exemple de récepteur mettant en oeuvre ce type de méthode est présenté dans la suite de la description à l'aide de la figure 4.

Il est aussi possible d'utiliser une méthode d'égalisation de canal par apprentissage de la fonction de transfert dans la zone correspondant au retard de l'écho principal. Afin d'obtenir cette fonction de transfert, le récepteur utilise, par exemple, des bits pilotes présents sur ladite zone. Ces bits pilotes sont positionnés, par exemple, a priori. Le récepteur peut aussi, par exemple, demander à l'émetteur par signalisation de transmettre un ou plusieurs symboles pilotes à un instant correspondant au retard $\tau$.

Il est aussi possible d'utiliser de manière itérative des bits démodulés à l'endroit de l'interférence, en d'autres termes de réaliser une égalisation conjointe pilotes/données ou aveugle.

A titre d'exemple, une égalisation conjointe pilotes/données à 2 coefficients peut être utilisée. En effet, les symboles $S_i$ et $S_{i+1}$ reçus successivement peuvent s'exprimer en utilisant l'expression suivante :

$$\begin{pmatrix} s_i \\ s_{i+1} \end{pmatrix} = \begin{pmatrix} p_i & r_{h+i} \\ p_{i+1} & r_{h+i+1} \end{pmatrix} \times \begin{pmatrix} h_1 \\ h_2 \end{pmatrix} \qquad\qquad (3)$$

dans laquelle :

$S_i$ représente un symbole de modulation du signal reçu s(t) d'indice i ;

$p_i$ représente un symbole pilote d'indice i ;

$r_{h+i}$ représente un symbole démodulé d'indice h+i à partir d'un symbole reçu $s_{h+i}$, h représentant le nombre de symboles entre $s_i$ et le symbole reçu $s_{h+i}$ et correspond au retard $\tau$ ;

$h_1$ représente le premier coefficient du filtre modélisant le canal de propagation et correspond au trajet principal reçu ;

$h_2$ représente le premier coefficient du filtre modélisant le canal de propagation et correspond à l'écho principal tel que perçu en réception ;

L'expression (3) est équivalente à l'expression (4) présentée ci-dessous, S, P et H représentant respectivement les matrices de l'expression (3) :

$$S = P \times H \qquad (4)$$

Dans ce cas, la matrice H est déterminée par simple inversion de la matrice P. Dans le cas où la matrice S comporte un nombre supérieur à deux coefficients (matrice P rectangulaire), il est possible de déterminer en réception les coefficients de la matrice H en utilisant l'expression suivante faisant intervenir la matrice pseudo-inverse de P :

$$H = \left(P^T \times P\right)^{-1} \times P^T \times S \qquad (5)$$

Un égaliseur à deux coefficients présente comme avantages une simplicité de mise en oeuvre, et permet de corriger le décalage en fréquence dû à l'effet Doppler ainsi que d'égaliser des trajets éloignés.

Une méthode telle celle présentée dans la demande de brevet GB 2 405 059 intitulée *processing received information bits at a location measurement unit for time of arrival estimation* peut aussi être utilisée. Ladite méthode a notamment pour objectif d'améliorer la précision de l'estimation de canal à des fins de localisation et présente une manière d'estimer le canal en utilisant des bits pilotes disponibles dans un premier temps, puis les données démodulées séparées du retard estimé dans un deuxième temps elles même considérées comme des bits pilote lors d'itérations ultérieures.

Les demandes de brevet WO 2007/059560 A1 et D2 US 2002/005799 A1 décrivent, comme indiqué dans le préambule de la revendication 1 des dispositifs de communication entre deux aéronefs par chemins multiple.

La méthode d'égalisation selon l'invention permet avantageusement de réduire l'interférence due aux trajets lointains tout en permettant de garder une complexité d'implémentation raisonnable.

La figure 3 donne un exemple de système de communications par satellite mettant en oeuvre l'invention.

Dans cet exemple, un aéronef 300 survolant la mer à une altitude ha 304 transmet des données à un astronef, par exemple un satellite 301 d'altitude hb 305. Le satellite reçoit un signal résultant principalement d'une combinaison d'un trajet direct 302 et d'un écho principal 303.

Le satellite comprend des moyens pour acquérir la distance d entre l'aéronef et le satellite ainsi que les altitudes ha et hb, l'altitude hb. Le satellite peut ainsi déterminer le retard $\tau$ et ensuite égaliser le signal ou annuler l'écho principal.

La figure 4 donne un exemple de récepteur comportant un mécanisme d'annulation d'interférence.

Cet exemple décrit un récepteur 401 embarqué dans un aéronef B. Ledit récepteur reçoit un signal s(t) en provenance d'un aéronef A. Le signal s(t) est utilisé en entrée par un module d'acquisition de paramètres 403. Ce module a pour objectif d'obtenir les valeurs des paramètres ha et P(A) qui sont respectivement l'altitude et la position de l'aéronef A. Ces informations sont, par exemple, transmises à l'aéronef B au travers d'un canal de signalisation. P(B) est connue du récepteur qui comprend, par exemple, un module GPS. Le paramètre d peut donc être déduit de la connaissance de P(A) et P(B). Une autre manière d'acquérir la valeur de d est possible du fait que sa connaissance est habituellement intrinsèque à la forme d'onde et obtenue par mesure de l'avance temporelle. Cette avance temporelle entre signaux reçu s(t) et émis e(t), habituellement désignée par l'expression anglo-saxonne « timing advance », est accessible du fait que le destinataire répond à un temps t connu de l'émetteur. La partie émission 402 du récepteur est par conséquent reliée au module d'acquisition de paramètres.

La hauteur hb est fournie, par exemple, par un radioaltimètre 400 embarqué dans l'aéronef B. Les valeurs de d et de ha fournies par le module d'acquisition de paramètres 403 et la valeur de hb fournie par le radioaltimètre 400 permettent à un module de calcul de retard 404 de déterminer la valeur de $\tau$ associée à l'écho principal.

Un signal s'(t) corrigé de l'écart de phase correspondant à la fréquence $f_d$ estimée est présenté en sortie du module de correction Doppler 405 décrit ci-après. Une estimation 406 du signal interférent $\beta \times$s'(t-$\tau$) est ensuite généré 406 pour être soustraite 407 au signal s(t).

Le coefficient complexe $\beta$ peut être obtenu, par exemple, par la méthode décrite dans le livre de A. Giordano et F.M. Hsu intitulé « least square estimation with application to digital signal processing », p191-194, John Wiley & Sons, 1985. Ainsi le coefficient complexe $\beta$ est obtenu par une méthode classique de sondage de canal. Il est choisi de façon à minimiser en moyenne l'écart quadratique entre un signal pilote reçu et le signal s(t) reçu. La détermination de $\beta$ est classique et utilise la méthode des moindres carrés.

Le signal $\hat{s}(t)$ résultant de la soustraction 407 de $\beta \times s'(t-\tau)$ à $s(t)$ est ensuite présenté en entrée d'un module de démodulation 408.

Qu'il s'agisse de la méthode d'égalisation ou d'annulation d'interférence, un module de correction du décalage Doppler différentiel 405 selon l'invention est utilisé au préalable des phases d'estimation de canal. Le décalage Doppler différentiel est la différence entre le décalage Doppler selon la direction de l'alignement des deux aéronefs A et B auquel est soustrait le décalage Doppler correspondant aux deux trajets de l'écho principal de longueurs respectives d1 et d2. Le décalage Doppler différentiel $\Delta f_{diff}$ peut être estimé en utilisant l'expression suivante :

$$\Delta f_{diff}(k+1) = \left[\frac{D_{k+1} - D_k}{\Delta t \times \lambda}\right] - \left[\frac{d_{k+1} - d_k}{\Delta t \times \lambda}\right] \qquad (6)$$

dans laquelle :

$d_k$ représente la distance entre les deux aéronefs à l'instant k ;
$D_k$ représente la valeur de la quantité D mesurée à l'instant k ;
$\Delta t$ représente le temps entre deux mesures successives du décalage Doppler différentiel ;
$\lambda$ représente la longueur d'onde du signal.

L'invention ne se limite pas au domaine des communications aéronautiques et pourra également s'appliquer avantageusement pour la transmission d'information entre un chasseur et un missile.

## Revendications

1. Dispositif embarqué (101) de réception d'un signal s(t) en provenance d'un aéronef (100) éloigné d'une distance d du dispositif (101), ledit signal s(t) résultant de la combinaison d'une pluralité de trajets de propagation, l'un des trajets correspondant à l'écho principal (103) du signal émis, ledit dispositif comportant un égaliseur d'une profondeur de traitement T et étant **caractérisé en ce qu'**il comporte des moyens pour estimer la distance D parcourue par le second trajet, des moyens pour en déduire une valeur de retard $\tau$ lui étant associée, des moyens pour estimer lorsque $\tau$ est supérieur ou égal à T le signal interférent associé à l'écho principal (103) et pour réduire la contribution dudit signal au niveau total d'interférences en réception.

2. Dispositif selon la revendication 1 caractérisé en D est estimé en utilisant l'expression :

$$D = \sqrt{d^2 + 4 \times ha \times hb}$$

dans laquelle :

ha est l'altitude à laquelle se trouve le dispositif par rapport au niveau de la mer ou du sol ;
hb est l'altitude de l'aéronef emetteur (100).

3. Dispositif selon l'une quelconque des revendications précédentes **caractérisé en ce qu'**il comporte des moyens pour soustraire du signal reçu s(t) une version retardée de $\tau$ dudit signal afin de réduire la contribution de l'écho principal au niveau total d'interférences en réception.

4. Dispositif selon la revendication 3 **caractérisé en ce qu'**il comporte des moyens (405) pour estimer le décalage Doppler différentiel $\Delta f_{diff}$ en utilisant l'expression suivante :

$$\Delta f_{diff}(k+1) = \left[\frac{D_{k+1} - D_k}{\Delta t \times \lambda}\right] - \left[\frac{d_{k+1} - d_k}{\Delta t \times \lambda}\right]$$

dans laquelle :

> $d_k$ représente la distance entre les deux aéronefs à l'instant k ;
> $D_k$ représente la valeur de la quantité D mesurée à l'instant k ;
> $\Delta t$ représente le temps entre deux mesures successives du décalage Doppler différentiel ;
> $\lambda$ représente la longueur d'onde du signal
> et pour corriger la version retardée du signal s(t) afin d'obtenir un signal s'(t-$\tau$).

5. Dispositif selon la revendication 4 **caractérisé en ce qu'**un coefficient $\beta$ est appliqué (406) sur le signal s'(t-$\tau$), ledit coefficient étant tel qu'il minimise en moyenne l'écart quadratique entre un signal pilote reçu et le signal s(t) reçu.

6. Dispositif selon l'une quelconque des revendications 1 ou 2 **caractérisé en ce qu'**il comporte des moyens pour estimer la fonction de transfert du canal de propagation dans la zone correspondant au retard $\tau$ de l'écho principal de manière à réduire la contribution de l'écho principal au niveau total d'interférences en réception par égalisation.

7. Dispositif selon la revendication 6 **caractérisé en ce que** ladite fonction de transfert est obtenue par traitement de bits pilotes présents sur ladite zone.

8. Dispositif selon la revendication 6 **caractérisé en ce qu'**il comporte des moyens d'égalisation conjointe pilotes/données utilisés pour réduire la contribution de l'écho principal au niveau total d'interférences en réception.

9. Satellite **caractérisé en ce qu'**il comporte un dispositif selon l'une quelconque des revendications 1 à 8.

10. Aéronef **caractérisé en ce qu'**il comporte un dispositif selon l'une quelconque des revendications 1 à 8.

11. Système de communication entre aéronefs **caractérisé en ce qu'**un aéronef du système comporte au moins un dispositif d'émission de signaux selon une forme d'onde choisie et un dispositif de réception selon l'une quelconque des revendications 1 à 8 ledit dispositif permettant de recevoir des signaux utilisant cette même forme d'onde.

12. Système selon l'une quelconque la revendication 11 **caractérisé en ce que** les aéronefs du système comportent un dispositif de mesure d'altitude.

13. Système selon la revendication 12 **caractérisé en ce que** le dispositif de mesure d'altitude est un radioaltimètre.

14. Système selon la revendication 12 **caractérisé en ce que** le dispositif de mesure d'altitude est un récepteur GPS.

15. Système selon la revendication 14 **caractérisé en ce que** les aéronefs du système comportent des moyens de transmission réciproque de leurs positions estimée par leur récepteur GPS.

16. Système selon l'une quelconque des revendications 11 à 14 **caractérisé en ce que** les aéronefs du système comportent des moyens de transmission réciproque de leurs altitudes (ha, hb).


**Patentansprüche**

1. Bordvorrichtung (101) zum Empfangen eines Signals s(t), das von einem Luftfahrzeug (100) kommt, das sich in einer Entfernung d von der Vorrichtung (101) befindet, wobei das Signal s(t) von der Kombination von mehreren Ausbreitungswegen resultiert, wobei einer der Wege dem Hauptecho (103) des ausgesendeten Signals entspricht, wobei die Vorrichtung einen Verarbeitungstiefen-Equalizer T umfasst, und **dadurch gekennzeichnet, dass** sie Mittel zum Schätzen der auf dem zweiten Weg zurückgelegten Entfernung D, Mittel zum Ableiten eines damit assoziierten Verzögerungswertes $\tau$ davon, Mittel zum Schätzen, wenn $\tau$ gleich oder größer als T ist, des mit dem Hauptecho (103) assoziierten Interferenzsignals und zum Reduzieren des Beitrags des Signals zur Gesamtinterferenz beim Empfang beinhaltet.

2. Vorrichtung nach Anspruch 1, **dadurch gekennzeichnet, dass** D mittels des folgenden Ausdrucks geschätzt wird:

$$D = \sqrt{d^2 + 4 \times ha \times hb}$$

wobei:

ha die Höhe ist, auf der sich die Vorrichtung über dem Meer oder über dem Boden befindet;
hb die Höhe des sendenden Luftfahrzeugs (100) ist.

3. Vorrichtung nach einem der vorherigen Ansprüche, **dadurch gekennzeichnet, dass** sie Mittel zum Subtrahieren einer um $\tau$ verzögerten Version des empfangenen Signals s(t) von dem Signal umfasst, um den Beitrag des Hauptechos zur Gesamtinterferenz beim Empfang zu reduzieren.

4. Vorrichtung nach Anspruch 3, **dadurch gekennzeichnet, dass** sie Mittel (405) zum Schätzen der differentiellen Doppler-Verschiebung $\Delta f_{diff}$ mittels des folgenden Ausdrucks umfasst:

$$\Delta f_{diff}(k+1) = \left[ \frac{D_{k+1} - D_k}{\Delta t \times \lambda} \right] - \left[ \frac{d_{k+1} - d_k}{\Delta t \times \lambda} \right]$$

wobei:

$d_k$ die Entfernung zwischen den beiden Luftfahrzeugen zum Zeitpunkt k repräsentiert;
$D_k$ den Wert der zum Zeitpunkt k gemessenen Größe D repräsentiert;
$\Delta t$ die Zeit zwischen zwei aufeinander folgenden Messungen der differentiellen Doppler-Verschiebung repräsentiert;
$\lambda$ die Wellenlänge des Signals repräsentiert;
und zum Korrigieren der verzögerten Version des Signals s(t), um ein Signal s'(t-$\tau$) zu erhalten.

5. Vorrichtung nach Anspruch 4, **dadurch gekennzeichnet, dass** ein Koeffizient $\beta$ auf das Signal s'(t-$\tau$) angewandt (406) wird, wobei der Koeffizient so ist, dass er die mittlere quadratische Abweichung zwischen einem empfangenen Pilotsignal und dem empfangenen Signal s(t) minimiert.

6. Vorrichtung nach Anspruch 1 oder 2, **dadurch gekennzeichnet, dass** sie Mittel zum Schätzen der Transferfunktion des Ausbreitungskanals in der Zone umfasst, entsprechend der Verzögerung $\tau$ des Hauptechos, um den Beitrag des Hauptechos zur Gesamtinterferenz beim Empfang durch Entzerren zu reduzieren.

7. Vorrichtung nach Anspruch 6, **dadurch gekennzeichnet, dass** die Transferfunktion durch Verarbeiten von in der Zone vorhandenen Pilotbits erhalten wird.

8. Vorrichtung nach Anspruch 6, **dadurch gekennzeichnet, dass** sie gemeinsame Pilot/Daten-Entzerrungsmittel umfasst, die zum Reduzieren des Beitrags des Hauptsignals zur Gesamtinterferenz beim Empfang benutzt werden.

9. Satellit, **dadurch gekennzeichnet, dass** er eine Vorrichtung nach einem der Ansprüche 1 bis 8 umfasst.

10. Luftfahrzeug, **dadurch gekennzeichnet, dass** es eine Vorrichtung nach einem der Ansprüche 1 bis 8 umfasst.

11. System zur Kommunikation zwischen Luftfahrzeugen, **dadurch gekennzeichnet, dass** ein Luftfahrzeug des Systems wenigstens eine Vorrichtung zum Aussenden von Signalen gemäß einer gewählten Wellenform und eine Empfangsvorrichtung nach einem der Ansprüche 1 bis 8 umfasst, wobei die Vorrichtung den Empfang von Signalen zulässt, die dieselbe Wellenform benutzen.

12. System nach Anspruch 11, **dadurch gekennzeichnet, dass** die Luftfahrzeuge des Systems eine Höhenmessvorrichtung umfassen.

13. System nach Anspruch 12, **dadurch gekennzeichnet, dass** die Höhenmessvorrichtung ein Funkhöhenmesser ist.

**14.** System nach Anspruch 12, **dadurch gekennzeichnet, dass** die Höhenmessvorrichtung ein GPS-Empfänger ist.

**15.** System nach Anspruch 14, **dadurch gekennzeichnet, dass** die Luftfahrzeuge des Systems Mittel zur gegenseitigen Übertragung ihrer von ihrem GPS-Empfänger geschätzten Positionen umfassen.

**16.** System nach einem der Ansprüche 11 bis 14, **dadurch gekennzeichnet, dass** die Luftfahrzeuge des Systems Mittel zur gegenseitigen Übertragung ihrer Höhen (ha, hb) umfassen.

**Claims**

**1.** An onboard device (101) for receiving a signal s(t) coming from a transmitting aircraft (100) at a distance d from the device (101), said signal s(t) resulting from the combination of a plurality of propagation paths, one of the paths corresponding to the main echo (103) of the transmitted signal, said device comprising: an equalizer of processing depth T; and **characterized in that** it comprises means for estimating the distance D covered by the second path; means for deducing therefrom a delay value $\tau$ associated therewith; means for estimating when $\tau$ is greater than or equal to T the interfering signal associated with the main echo (103) and for reducing the contribution of said signal to the total level of interference received.

**2.** The device according to claim 1, **characterized in that** the distance D is estimated using the expression:

$$D = \sqrt{d^2 + 4 \times ha \times hb}$$

in which:

ha is the altitude of the device relative to sea level or ground level;
and hb is the altitude of the transmitting aircraft (100).

**3.** The device according any one of the preceding claims, **characterized in that** it comprises means for subtracting from the received signal s(t) a version of said signal delayed by $\tau$ in order to reduce the contribution of the main echo to the total level of interference received.

**4.** The device according to claim 3, **characterized in that** it comprises means (405) for estimating a differential Doppler shift $\Delta f_{diff}$ using the following expression:

$$\Delta f_{diff}(k+1) = \left[\frac{D_{k+1} - D_k}{\Delta t \times \lambda}\right] - \left[\frac{d_{k+1} - d_k}{\Delta t \times \lambda}\right]$$

in which:

$d_k$ represents the distance between the two aircrafts at the time k,
$D_k$ represents the value of the quantity D determined for the time k,
$\Delta t$ represents the time between two successive measurements of the differential Doppler shift,
$\lambda$ represents the wavelength of the signal;
and to correct the delayed version of the signal s(t) in order to obtain a signal s'(t-$\tau$).

**5.** The device according to claim 4, **characterized in that** a coefficient $\beta$ is applied (406) to the signal s'(t-$\tau$), said coefficient being such that it minimizes a mean square error between a received pilot signal and the received signal s(t).

**6.** The device according to any of claim 1 or 2, **characterized in that** it comprises means for estimating a transfer function of the propagation channel in the area corresponding to the delay $\tau$ of the main echo to reduce by equalization the contribution of the main echo to the total level of interference received.

7. The device according to claim 6, **characterized in that** said transfer function is obtained by processing pilot bits present in said area.

8. The device according to claim 6, **characterized in that** it comprises conjoint pilot/data equalization means used to reduce the contribution of the main echo to the total level of interference received.

9. A satellite **characterized in that** it comprises a device according to any of the claims 1 to 8.

10. An aircraft **characterized in that** it comprises a device according to any of the claims 1 to 8.

11. A system for communication between aircrafts **characterized in that** an aircraft of the system comprises at least one device for transmitting signals with a chosen waveforms; and a receiver device according to any of the claims 1 to 8, said device enabling reception of signals using this same waveform.

12. The system according to claim 11, **characterized in that** the aircrafts of the system include an altitude measuring device.

13. The system according to claim 12, **characterized in that** the altitude measuring device is a radio altimeter.

14. The system according to claim 12, **characterized in that** the altitude measuring device is a GPS receiver.

15. The system according to claim 14, **characterized in that** the aircrafts of the system include means for reciprocal transmission of their position estimated by their GPS receiver.

16. The system according any of the claims 11 to 14, **characterized in that** the aircrafts of the system include means for reciprocal transmission of their altitude (ha, hb).

EP 2 548 308 B1

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2405059 A
- WO 2007059560 A1
- US 2002005799 A1

**Littérature non-brevet citée dans la description**

- **T. LUCIDARME.** Principes de radiocommunication de troisième génération. 2002
- **A. GIORDANO ; F.M. HSU.** least square estimation with application to digital signal processing. John Wiley & Sons, 1985, 191-194